(19) Europäisches Patentamt / European Patent Office / Office européen des brevets

(11) **EP 4 354 196 B1**

(12) **EUROPEAN PATENT SPECIFICATION**

(45) Date of publication and mention
of the grant of the patent:
**09.04.2025  Bulletin 2025/15**

(21) Application number: **22200743.7**

(22) Date of filing: **11.10.2022**

(51) International Patent Classification (IPC):
*G02B 21/00* (2006.01)      *G02B 21/36* (2006.01)

(52) Cooperative Patent Classification (CPC):
**G02B 21/002; G02B 21/0076; G02B 21/367;**
G02B 26/101; G02B 27/106

(54) **MESOSCALE NONLINEAR OPTICAL GIGASCOPE SYSTEM WITH REAL-TIME GIGAPIXEL MOSAIC-STITCHING AND DIGITAL DISPLAY**

NICHTLINEARES OPTISCHES GIGASKOPSYSTEM IM MESOMASSSTAB MIT GIGAPIXEL-MOSAIKSTICH IN ECHTZEIT UND DIGITALER ANZEIGE

SYSTÈME DE GIGASCOPE OPTIQUE NON LINÉAIRE À MÉSOÉCHELLE AVEC POINT DE MOSAÏQUE GIGAPIXEL EN TEMPS RÉEL ET AFFICHAGE NUMÉRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**17.04.2024  Bulletin 2024/16**

(73) Proprietor: **National Taiwan University**
**Taipei City 10617 (TW)**

(72) Inventors:
• **SUN, Chi-Kuang**
**10617 Taipei City (TW)**

• **BORAH, Bhaskar Jyoti**
**10617 Taipei City (TW)**

(74) Representative: **Viering, Jentschura & Partner mbB**
**Patent- und Rechtsanwälte**
**Am Brauhaus 8**
**01099 Dresden (DE)**

(56) References cited:
**US-A1- 2011 147 615     US-A1- 2017 038 576**

**Description**

**FIELD OF THE DISCLOSURE**

The present disclosure relates to a system, and more particularly to a mesoscale nonlinear optical gigascope (mNLOG) system used to provide rapid gigapixel resonant-raster laser-scanning and digital display for a centimeter-scale biological specimen in real-time.

**BACKGROUND OF THE DISCLOSURE**

US 2011147615 AI discloses a method and an apparatus for microscopic imaging system with wide field of view and high collection efficiency, and US 2017038576 AI discloses an image processing apparatus and an imaging apparatus.

Optically-sectioned centimeter-scale imaging is critical in various bioimaging applications, such as imaging of a whole animal brain or an ultra-large organ, imaging of an expansion microscopy sample, rapid two-dimensional (2D) histopathological imaging of an ultra-large biological specimen, etc. A high enough digital resolution is imperative to observe fine enough morphologies, such as nerve fibers, while a fast enough scanning and display speed is often expected to keep the cumulative assessment time as short as possible.

In a digital optical microscopy system, to reliably retrieve a half-a-micron optical resolution digitally, the sampling pixel size is expected to be smaller than or at least equal to 0.25 $\mu$m according to the Nyquist-Shannon sampling criterion. Considering a $1.0 \times 1.0$ mm$^2$ imaging area, a total of at least 384 M bits would be thus required where each 3-channel pixel is 24-bit in data size. Extending the requirement for a $1.0 \times 1.0$ cm$^2$ cumulative imaging area, a total of at least 38.4 G bits or 1.6 Gigapixels would be required.

It is noted that in an optical microscopy system, a high numerical aperture (NA) that is close to or greater than 1 is necessary to secure a submicron optical lateral resolution. However, a high-NA objective lens often limits the field-of-view (FOV) to less than 1 mm$^2$, which eventually mandates a series of mosaicking or stitching operations while imaging a centimeter-scale area. It is further noted that the associated stitching operations are expected to be artifact-free to not compromise with the data reliability.

Despite substantial contributions being made towards image/video or panoramic stitching techniques, feature-based sophisticated algorithms are often not suitable for a large-FOV high-pixel-rate dynamic optical microscopy in the context of post-processing-free operation, parallel implementation, distortion compensation, immunity to high-frequency noise, and especially to assist with half-a-second computational complexity for real-time stitching of Nyquist-satisfied ultra-high resolution (such as >800 M bit) imaging tiles.

Thus, one would need to perform the imaging way faster so that it becomes feasible to rapidly scan a centimeter scale area within a few tens-of-seconds while not much sacrificing either the digital resolution or the signal-to-noise ratio. In addition, all associated digital image mosaicking or stitching operations must be performed in real-time so that the cumulative imaging time remains as short as possible, and while doing so, it is also expected that the quality of mosaicking or stitching remains satisfactory.

**SUMMARY OF THE DISCLOSURE**

In response to the above-referenced technical inadequacies, the present disclosure presents a mesoscale nonlinear optical gigascope (mNLOG) system used to provide rapid gigapixel resonant-raster laser-scanning and digital display for a centimeter-scale biological specimen in real-time.

According to the invention, a mesoscale nonlinear optical gigascope (mNLOG) system according to claim 1 is provided. Further examples of the mNLOG system are described in the dependent claims.

In one aspect, the present disclosure provides a mesoscale nonlinear optical gigascope (mNLOG) system for centimeter-scale laser-raster-scanning of a biological specimen with Nyquist-satisfied <1 micron ($\mu$m) effective digital resolution providing an aliasing-free optically-sectioned cumulative point-scanning area ranging from 1 square millimeter (mm) up-to 400 square mm, the mNLOG system being configured to perform a rapid artifact-compensated two-dimensional (2D) large-field mosaic-stitching (rac2D-LMS) approach enabling post-processing-free gigapixel mosaic-stitching and real-time digital display with a sustained effective data throughput of at least 500 Megabits per second (Mbps), and the mNLOG system includes a scanning head, a first relay system, an objective lens, a multichannel optical detection unit, a multichannel data acquisition and display unit and a motorized three-dimensional (3D) stage unit. The scanning head includes a scanning mirror and a galvanometer scanning mirror, in which the scanning mirror is optically coupled to one or more pulsed laser sources, the galvanometer scanning mirror is optically coupled to the scanning mirror, the scanning head is configured to generate a resonant scanning laser beam, and the scanning mirror is a resonant scanning mirror or a polygon scanning mirror. The first relay system includes a scan lens and a tube lens providing a magnification factor of greater than 1, in which the scan lens is optically coupled to the galvanometer scanning mirror, and the tube lens is optically coupled to the scan lens. The objective lens is optically coupled to the tube lens, wherein the objective lens is used to focus the resonant scanning laser beam over the biological specimen. The multichannel optical detection unit includes a plurality of focusing lenses, a plurality of dichroic beam splitters, and a plurality of receivers, in which one or more of nonlinear multi-harmonic generation and nonlinear multi-photon excitation fluorescence signals are collected by the plurality of receivers, respectively, through the focusing lenses and the dichroic beam splitters, and the plurality of receivers are configured to generate a plurality of electrical output signals. The multichannel data acquisition and display unit is configured to receive the plurality of electrical output signals, and the multichannel data acquisition and display unit includes a first transimpedance amplifier (TIA), a second TIA, a third TIA, a multichannel digitizer, a processing device including a computer with a central processing unit (CPU) and one or more graphics processing units (GPUs) that perform multiple C++-based algorithms stored in a memory of the computer, and a display device. The motorized 3D stage unit includes a first electronic stage, a second electronic stage, and a third linear electronic stage that are used to bear and move the biological specimen.

These and other aspects of the present disclosure will become apparent from the following description of the embodiment taken in conjunction with the following drawings and their captions, although variations and modifications therein may be affected without departing from the scope of the novel concepts of the disclosure.

## BRIEF DESCRIPTION OF THE DRAWINGS

The described embodiments may be better understood by reference to the following description and the accompanying drawings, in which:

FIG. 1 is a functional block diagram of a mesoscale nonlinear optical gigascope (mNLOG) system according to one embodiment of the present disclosure;

FIG. 2 is a flowchart of an mNLOG operation according to one embodiment of the present disclosure;

FIG. 3 is a schematic diagram illustrating a basic idea of the radial-distortion compensation according to one embodiment of the present disclosure;

FIG. 4 illustrates the radial-distortion compensation through simulated grid images according to one embodiment of the present disclosure;

FIG. 5 shows a basic idea of the mosaic-stitching according to one embodiment of the present disclosure;

FIG. 6 depicts a mosaic-stitched view of $3\times2$ tiles revealing a submicron digital resolution and an artifact-compensated mosaic-stitching nature according to one embodiment of the present disclosure; and

FIG. 7 is an ultra-large gigapixel-sampled color-remapped mNLOG image comprising $38,650\times33,280$ pixels according to one embodiment of the present disclosure.

## DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

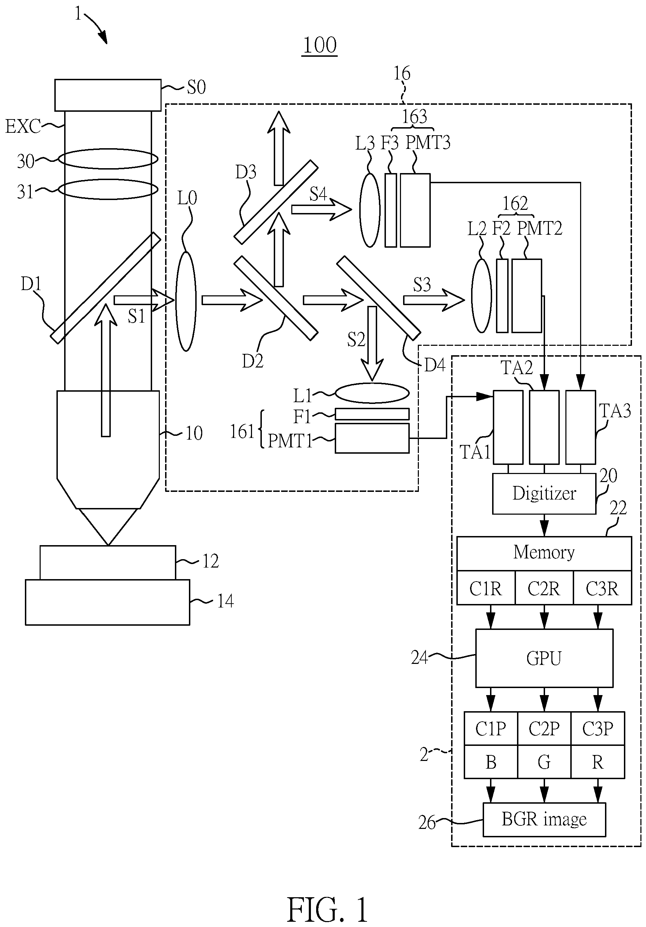

Reference is made to FIG. 1, which is a functional block diagram of a mesoscale nonlinear optical gigascope (*m*NLOG) system according to one embodiment of the present disclosure.

Referring to FIG. 1, one embodiment of the present disclosure provides a mesoscale nonlinear optical gigascope (*m*NLOG) system 100, which includes a detection device 1 and a host 2. The detection device 1 includes an optical scanning unit S0, an objective lens 10, a motorized three-dimensional (3D) stage unit 14, a multichannel detection unit 16.

For example, the detection device 1 can be a basic optical detection unit. The objective lens 10 focuses a resonant-raster-scanning laser beam EXC having a predetermined central wavelength (e.g., 1070 nm) over a biological specimen 12 being placed on the motorized 3D stage unit 14, which can includes three electronic stages. A primary dichroic beam splitter D1 cut-on at a primary wavelength (e.g., 735 nm) reflects an emerging optical signal S1 to a multichannel detection unit 16 including a plurality of relay systems with focusing lenses L0, L1, L2 and L3, in which the focusing lens L0 has an effective focal length (EFL) of 150 mm, and the focusing lenses L1, L2 and L3 have an EFL of 40 mm.

For spectral separations, dichroic beam splitters D2, D3 and D4 are utilized, and have a plurality of cut-on wavelengths, which can be, for example, 505 nm, 473 nm, and 560 nm, respectively.

Specifically, one or more of nonlinear multi-harmonic generation and nonlinear multi-photon excitation fluorescence signals can be collected by multiple receivers, respectively, through the focusing lenses and the dichroic beam splitters mentioned above. For example, with a 1070 nm central excitation wavelength, the dichroic beam splitter D4 can be used to reflect a second harmonic generation (SHG) signal S2 to a photomultiplier tube PMT1 of a first receiver 161, and to transmit a two-photon excitation fluorescence (TPEF) signal S3 to a photomultiplier tube PMT 2 of a second receiver 162. The dichroic beam splitters D2 and D3 assist in collecting a third harmonic generation (THG) signal S4 at a photomultiplier tube PMT3 of a third receiver 163. It should be noted that each receiver can include at least one band-pass filter and at least one photomultiplier tube, but the present disclosure is not limited thereto.

For example, band-pass filters F1, F2 and F3 are configured to assist in confirming that a specific optical signal of interest is received. Transimpedance amplifiers T1, T2 and T3 are configured to amplify electrical output signals from the photomultiplier tubes PMT1, PMT2 and PMT3, respectively.

Furthermore, the host 2 can be a multichannel data acquisition and display unit that includes the transimpedance amplifiers T1, T2, T3, the multichannel digitizer 20, a processing device and a display device. The processing device can include a computer with a central processing unit (CPU) and one or more graphics processing units that perform multiple C++-based algorithms stored in a memory of the computer. In one embodiment of the present disclosure, the host 2 is connected to the multichannel detection unit 16, and includes a digitizer 20, a host memory 22, a graphic processing unit (GPU) 24 and GPU buffers C1P-C3P. The amplified output signals from the first receiver 161, the second receiver 162 and the third receiver 163 can be digitized by the digitizer 20. The host memory 22 includes a plurality of available host buffers C1R-C3R for the 3-channel digitized data. C1R-C3R are uploaded to the GPU 24.

However, the aforementioned details are disclosed for exemplary purposes only, and are not meant to limit the scope of the present disclosure.

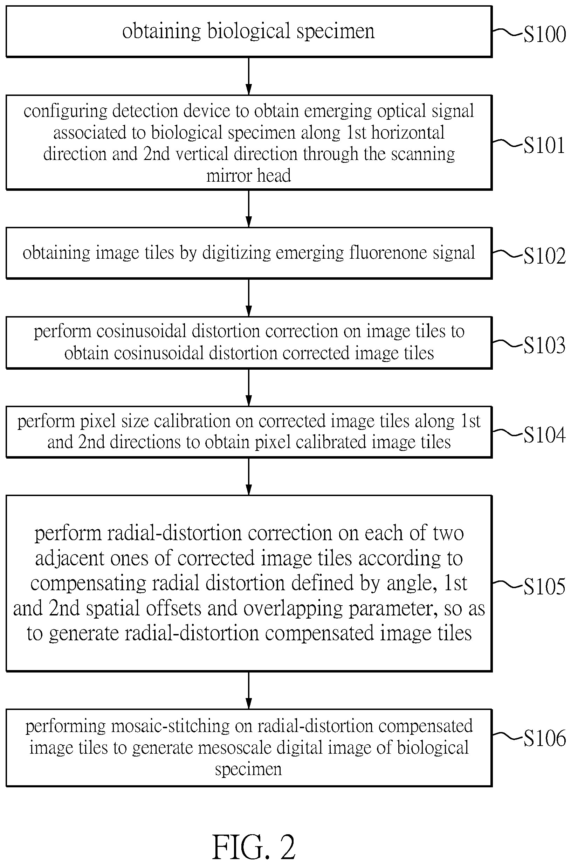

Reference can be made to FIG. 2, which is a flowchart of an *m*NLOG operation according to one embodiment of the present disclosure.

Specifically, the present disclosure provides a mesoscale nonlinear optical gigascope system 100 of FIG. 1 based on nonlinear optics to provide with rapid gigapixel resonant-raster laser-scanning and digital display of a centimeter-scale biological specimen in real-time, but the present is not limited thereto. As shown in FIG. 2, the mesoscale nonlinear optical gigascope system 100 of FIG. 1 can be configured to perform the *m*NLOG operation, which includes following steps:

Step S100: obtaining a biological specimen. It is noted that securing a high contrast and high signal-to-background ratio without any signal accumulation especially in an unstained biological specimen is often challenging, and thus staining the biological specimen with one or more relevant dyes, such as Hematoxylin and Eosin (H&E) in case of a histopathological imaging application, can help improve the image fidelity.

Next, the *m*NLOG operation proceeds to step S101: configuring the detection device to obtain an emerging optical signal associated to the biological specimen along a first horizontal direction and a second vertical direction through the optical scanning unit S0 comprising a scanning head optically coupled to one or more pulsed laser sources. The scanning head includes a resonant scanning mirror or a polygon scanning mirror that is optically coupled to a galvanometer scanning mirror.

As depicted in FIG. 1, the motorized 3D stage unit 14 can include three electronic stages and can be used to bear and move the biological specimen 12, along the first horizontal direction and the second vertical direction (e.g., X and Y axes, respectively). The optical scanning unit S0 that includes a scanning head optically coupled to one or more pulsed laser sources is followed by the relay system consisting of a scan lens 30 and a tube lens 31, which can provide the resonant scanning laser beam EXC, and can provide a high magnification factor that is greater than 1. The objective lens 10 can be utilized for focusing the resonant scanning laser beam over the biological specimen 12, and can be provided with a numerical aperture (NA) that is greater than or close to 1.0. In addition, the scan lens 30 can be optically coupled to the galvanometer scanning mirror, and the tube lens 31 can be optically coupled to the scan lens 30 and the objective lens 10.

The primary dichroic beam splitter D1 disposed between the objective lens 10 and the optical scanning unit S0 can reflect the emerging optical signal S1 from the biological specimen 12. Afterward, through the dichroic beam splitters and the focusing lenses, multiple optically separated signals S2, S3 and S4 of the emerging optical signal S1 can be collected by the receivers 161, 162 and 163, respectively.

Moreover, in the mesoscale nonlinear optical gigascope system 100 provided by the present disclosure, the host 2 can be configured to provide a rapid artifact-compensated two-dimensional (2D) large-field mosaic-stitching (rac2D-LMS) process while performing the following steps:

Step S102: obtaining a plurality of image tiles by digitizing the emerging optical signal. It should be noted that the method provided by the present disclosure requires at least two adjacent tiles with a non-zero overlap as inputs to estimate a compensating distortion. In some embodiments, the overlapping regions of the two adjacent tiles are expected to show up enough identical structural details.

Step S103: perform a cosinusoidal distortion correction on the plurality of image tiles to obtain a plurality of cosinusoidal distortion corrected image tiles. Specifically, the cosinusoidal distortion correction is required owing to a nonlinear speed profile of a resonant scanner.

Step S104: perform a pixel size calibration on the plurality of cosinusoidal distortion corrected image tiles along the first horizontal direction and the second vertical direction to obtain a plurality of pixel calibrated image tiles. For example, a basic pixel size calibration can be performed to make a pixel uniform along both X- and Y-axes.

Step S105: perform a radial-distortion compensation on each of two adjacent ones of the plurality of pixel calibrated image tiles according to a compensating radial-distortion defined by an angle, a first spatial offset, a second spatial offset and an overlapping parameter, so as to generate a plurality of radial-distortion compensated image tiles.

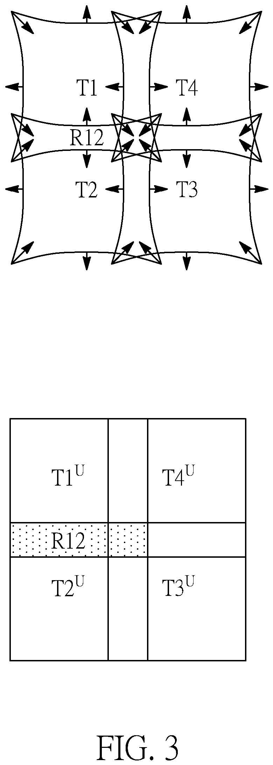

Reference can be further made to FIG. 3, which is a schematic diagram illustrating steps of the radial-distortion compensation according to one embodiment of the present disclosure.

As shown in FIG. 3, a core idea is to introduce an appropriate opposite radial-distortion to each tile following a field of view (FOV) distortion model. For instance, if an FOV is affected by a positive (i.e., pincushion) radial-distortion, a suitable negative (i.e., barrel) radial-distortion can be applied, such that a resultant FOV becomes distortion-free, and thus overlapping regions in two adjacent tiles become identical to assist with an artifact-free mosaic-stitching which is performed afterward. It should be noted that the compensating distortion needs to be estimated only one time for a specific system configuration provided by the present disclosure. Once the compensating distortion is estimated, corrected pixel coordinate maps can be pre-calculated to enable a near instantaneous distortion compensation.

To one-time assess the compensating radial-distortion, a brute-forced process is provided as depicted in FIG. 3, where two adjacent overlapping image tiles T1 and T2 are provided as input image tiles. Each tile is first converted to 8-bit grayscale format. To make the algorithm less susceptible to high-frequency noise, a morphological opening operation is performed to each input tile. Subsequently, a binary thresholding is applied. To regulate the distortion effect, three parameters are utilized, which are an angle ($A$, in degrees) governing the extent of distortion, and two spatial offsets ($X_{off}$ and $Y_{off}$) effecting the symmetry of distortion. For each case of $A$, $X_{off}$ and $Y_{off}$, each parameter within a specified range, opposite distortion induced output image tiles T1$^U$ and T2$^U$ can be obtained.

Based on a sum of absolute differences for all pixels within an overlapping region of interest R12 in FIG. 2, an assessment parameter $d_k$ is evaluated for each case. Finally, values of $A$, $X_{off}$ and $Y_{off}$ are set fixed corresponding to a minimum-$d_k$ case.

For a mathematical illustration, in the present embodiment, an input image $I_D(x, y)$ with C × R pixels is assumed. Firstly, two 2D arrays are defined as:

$$F_x(x,y) = \begin{pmatrix} 0 & \cdots & C-1 \\ \vdots & \ddots & \vdots \\ 0 & \cdots & C-1 \end{pmatrix}_{C \times R} \text{ and } F_y(x,y) = \begin{pmatrix} 0 & \cdots & 0 \\ \vdots & \ddots & \vdots \\ R-1 & \cdots & R-1 \end{pmatrix}_{C \times R};$$

then a first spatial scaling factor $S_x$ and a second spatial scaling factor $S_y$ are defined, and the following equations according to a field of view (FOV) distortion model can be obtained:

$$r_d(x,y) = \frac{360}{A\pi} \tan^{-1}\left[ 2r_u(x,y) \tan\frac{A\pi}{720} \right];$$

where

$$r_u(x,y) = \sqrt{r_x(x,y)^2 + r_y(x,y)^2},$$

$$r_x(x,y) = \frac{1}{c_1}(F_x(x,y) - c_1),$$

$$r_y(x, y) = \frac{1}{c_2}\big(F_y(x, y) - c_2\big),$$

$$c_1 = 0.5C\big(1.0 + X_{off}/S_x\big),$$

and

$$c_2 = 0.5C\big(1.0 + Y_{off}/S_y\big).$$

Next, a multiplicative factor $f(x, y)$ is defined as $r_u(x, y)/r_d(x, y)$ in case of a pincushion distortion, or as $r_d(x, y)/r_u(x, y)$ in case of a barrel distortion. Subsequently, two pixel-coordinate maps $M_x(x, y)$ and $M_y(x, y)$ for the first horizontal direction (X axis) and the second vertical direction (Y axis), respectively, are obtained as

$$M_x(x, y) = C_1[1 + r_x(x, y)\, f(x, y)];$$

and

$$M_y(x, y) = C_2\big[1 + r_y(x, y)\, f(x, y)\big].$$

Pixel remapping as per the above maps are performed for both adjacent image tiles T1 and T2, and the resultant images are obtained as the output image tiles T1$^U$ and T2$^U$, respectively. For an estimated overlapping region of interest (ROI) R$_{12}$, the assessment parameter $d_k$ is defined as:

$$d_k = \frac{\sum_{\text{All R12 pixels}}|T1^U - T2^U|}{Area(R_{12})};$$

where $k$ denotes each individual case. It should be noted that the distortion effect needs to be applied to all 4 quadrants of the adjacent image tiles. Therefore, the two adjacent overlapping image tiles T1 and T2 can be flipped along the first horizontal direction, the second vertical direction, and the first horizontal and the second vertical directions to obtain a first pair of flipping image tiles, a second pair of flipping image tiles, and a third pair of flipping image tiles. For example, the adjacent image tiles T1 and T2 are flipped along the X axis, the Y axis, and both the X and Y axes, and the pixel remapping operations are repeated based on the same two pixel-coordinate maps $M_x(x, y)$ and $M_y(x, y)$, and the associated assessment parameter $d_k$ can be calculated for each case. Finally, following the minimum-$d_k$ case, the corresponding $A$, $X_{off}$ and $Y_{off}$ can then be obtained. Noted that $X_{off}$ or $Y_{off}$ is set negative, if involving a flipping operation.

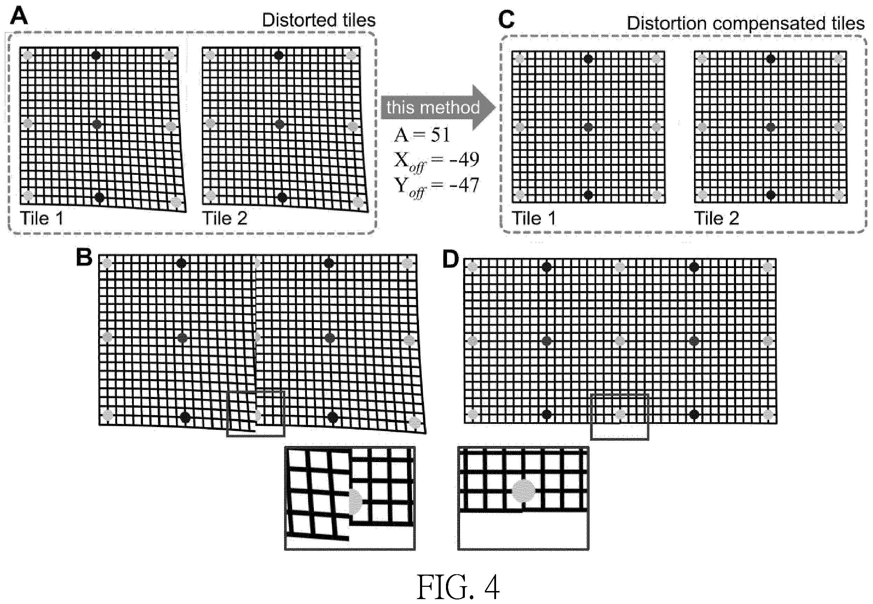

Reference is made to FIG. 4, which illustrates the radial-distortion compensation through simulated grid images according to one embodiment of the present disclosure. To test the method, a grid image is simulated where an asymmetric radial-distortion is induced. In part A of FIG. 4, two of such identically distorted tiles are shown. In part B of FIG. 4, a straightforward mosaic-stitching is depicted, where a marked ROI indicates a severe structural artifact or discontinuity. The image tiles in the part A are now processed with the radial-distortion compensation provided by the present disclosure, and the distortion parameters $A$, $X_{off}$ and $Y_{off}$ are assessed.

The radial-distortion compensated image tiles T1$^U$ and T2$^U$ are depicted in part C of FIG. 4. Curved lines in the distorted tiles essentially become straight after the distortion compensation provided by the present disclosure. Part D shows a mosaic-stitched result with the radial-distortion compensated image tiles, where the marked ROI reveals a near artifact-free nature.

To one-time estimate the distortion parameters $A$, $X_{off}$ and $Y_{off}$ provided by the present disclosure, a typical hematoxylin and eosin (H&E)-stained tissue sample is imaged, and the third harmonic generation (THG) signal S4 and the two-photon excitation fluorescence (TPEF) signal S3 are collected from hematoxylin and eosin dyes, respectively. Then, the distortion parameters are estimated for two sets of vertically and horizontally acquired adjacent image tiles as being depicted in Table II provided below:

Table II:

| Tests | Vertically acquired tiles | | | Horizontally acquired tiles | | |
|---|---|---|---|---|---|---|
| | A | $X_{off}$ | $Y_{off}$ | A | $X_{off}$ 0 | $Y_{off}$ |
| 1 | 25° | 7 | 19 | 27° | 5 | 17 |
| 2 | 25° | 5 | 20 | 24° | 6 | 20 |
| 3 | 25° | 7 | 23 | 25° | 6 | 21 |

According to Table II, each set consists of 4 continuous image tiles, and thus provides 3 overlapping regions. The average values of $A$, $X_{off}$ and $Y_{off}$ are found to be 25.2°, 6.0, and 20.0, respectively. Furthermore, the two pixel-coordinate maps $M_x(x, y)$ and $M_y(x, y)$ can be pre-calculated and fixed.

Reference can be made back to FIG. 1, the processed data of the host buffers C1R-C3R are now obtained as image data C1P-C3P, respectively. Designating pseudo colors to each channel, the image data C1P-C3P are merged into a BGR image 26.

Once the BGR image 26 is ready, the same gets queued to the pre-allocated GPU buffers. While an acquisition continues, the buffers get occupied by distortion corrected BGR image tiles T1$^U$, T2$^U$, and so on. Each queued tile is sequentially processed and aligned in real-time to facilitate a post-processing-free automatic mosaic-stitching.

Next, the rac2D-LMS process proceeds to step S106: performing a mosaic-stitching on the plurality of radial-distortion compensated image tiles to generate a mesoscale digital image of the biological specimen. The mesoscale digital image can be display on the display device 21 of the host 2 shown in FIG. 2.

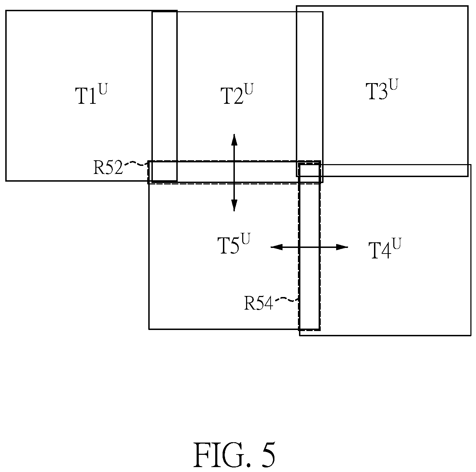

Reference can be made to FIG. 5, which shows a basic idea of the mosaic-stitching according to one embodiment of the present disclosure. As shown in FIG. 5, a to-be-aligned image tile T5$^U$ is to be aligned to the existing image tiles T1$^U$-T4$^U$. Firstly, one or more major overlapping regions of interest (ROIs) are identified, for example, overlapping regions R54 and R52 in this case.

It is noted that coordinates of the existing image tile T4$^U$ and T2$^U$, and the extents of overlap, i.e., widths of R54 and R52 can be estimated based on linear motion of the motorized 3D stage unit 14. Based on the estimation, to-be-aligned image tile T5$^U$ is slied along both the X and Y axes, so as to assess the major overlapping ROIs R54 and R52 to choose the best matching condition.

To make the process faster, a coarse mode is utilized, where a first predetermined pixel-step (e.g., 10) is employed while sliding. Once an acceptable solution is found, a fine-tuning is executed with a second predetermined pixel-step (e.g., 2) near the coarse-estimated solution, and the first predetermined pixel-step is larger than the second predetermined pixel-step.

The following descriptions provide a mathematical illustration of the mosaic-stitching utilized in the present disclosure. RangeY and RangeX stand for sliding ranges along the Y and X axes, respectively. Based on linear stage motion, an overlap $X_{OV}$ (i.e., width of R54) can be estimated. Another alignment parameter $Y_{AL}$ is defined to address an off-axis deviation between the to-be-aligned image tile T5$^U$ and the existing image tile T4$^U$. If the to-be-aligned image tile T5$^U$ is vertical to the existing image tile, the overlap and alignment parameters would be $Y_{OV}$ and $X_{AL}$, respectively.

For the coarse mode evaluation, $Y_{AL}$ is initially presumed to be zero, and RangeY is defined to be -70 to +70. Likewise, RangeX is defined to be $X_{OV}$-100 to $X_{OV}$+100. Following a step of 10 pixels, the to-be-aligned image tile T5$^U$ is slide along the X and Y axes. For each case of $X_{OV}$ and $Y_{AL}$, the major overlapping ROIs R54 (primary) and R52 (secondary) can be detected. R54-ROIs extracted from the to-be-aligned image tile T5$^U$ and the existing image tile T4$^U$ are being denoted as $T5^U_{R54}(r,c)$ and $T4^U_{R54}(r,c)$, respectively, each with R × C pixels. A 2× downscaling is applied thereafter.

A per-pixel absolute difference $d^A(r^{//}, c^{//})$ is calculated for all pixels in R54 as represented in the following equation:

$$d^A(r^{//}, c^{//}) = |T5^U_{R54}(r,c) - T4^U_{R54}(r,c)|$$

Note that R and C are number of rows and columns, respectively; and $r$ and $c$ respectively denote vertical and horizontal pixel coordinates.

Similar process is repeated for $T5^U_{R52}(r^/, c^/)$ and $T2^U_{R52}(r^/, c^/)$ for R52 (provided a secondary major overlap exists) and a per-pixel absolute difference $d^B(r^{///}, c^{///})$ is obtained.

Now, standard deviations $\sigma^A$ and $\sigma^B$ are calculated for $d^A(r^{//}, c^{//})$ and $d^B(r^{///}, c^{///})$, respectively, and a sum $\sigma^k$ is

obtained by adding $\sigma^A$ and $\sigma^B$. Note that $\sigma^B$ would be zero if there is no secondary major overlap.

Once coarse sliding is over, all cases of $X_{OV}$ and $Y_{AL}$ are considered. Therefore, the maximum and minimum values of $\sigma$ can be found, and if the difference is found to be higher than a pre-defined threshold, the fine-tuning can be executed. In the fine-tuning, the $X_{OV}$ and $Y_{AL}$ values corresponding to the minimum-$\sigma$ case are used, and RangeX and RangeY are defined as $X_{OV}$ -10 to $X_{OV}$ +10 and $Y_{AL}$ -10 to $Y_{AL}$ +10, respectively. Subsequently, following a reduced step of 2 pixels, the above sliding process is repeated, and thus $X_{OV}$ and $Y_{AL}$ are finalized.

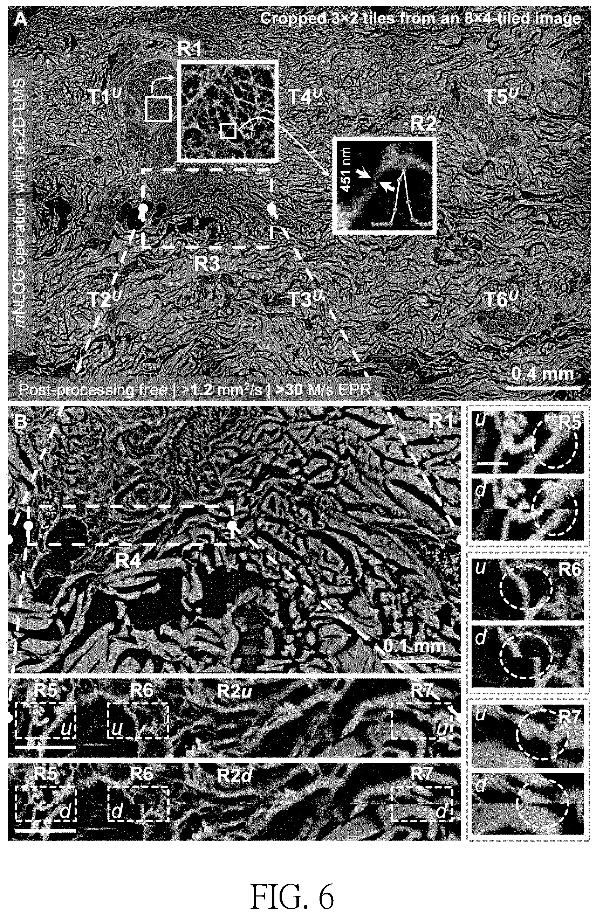

Reference can be made to A part of FIG. 6, which depicts a mosaic-stitched view of $3\times2$ tiles (being cropped from an ultra-large $8\times4$ tiled image) acquired with the mesoscale nonlinear optical gigascope system according to one embodiment of the present disclosure. A typical histopathology slide stained with standard hematoxylin and eosin dyes was used as imaging sample. $T1^U$-$T6^U$ denote radial-distortion compensated tiles. Each $1.1\times1.1$ mm$^2$ tile consists of $6000\times6000$ pixels. Green and red colors stand for TPEF signal from eosin and THG signal from hematoxylin, respectively. An ROI R1 is enlarged containing fine fiber structures. An ROI R2 is again selected inside the ROI R1, and the magnified view is depicted alongside. A 451 nm-thick ultrafine structure is digitally retrieved.

Reference can be made to B part of FIG. 6 wherein a 4-tile joining region ROI R3 (from A part) is enlarged. An ROI R4 marked in the B part is again magnified considering both undistorted (R2*u*) and distorted (R2*d*) cases. For better visualization, three ROIs R5, R6 and R7 are marked and enlarged alongside. White circled regions in each case validate an artifact-free mosaic-stitching nature, wherein *u* (undistorted) and *d* (distorted) respectively denote after- and before-compensation scenarios.

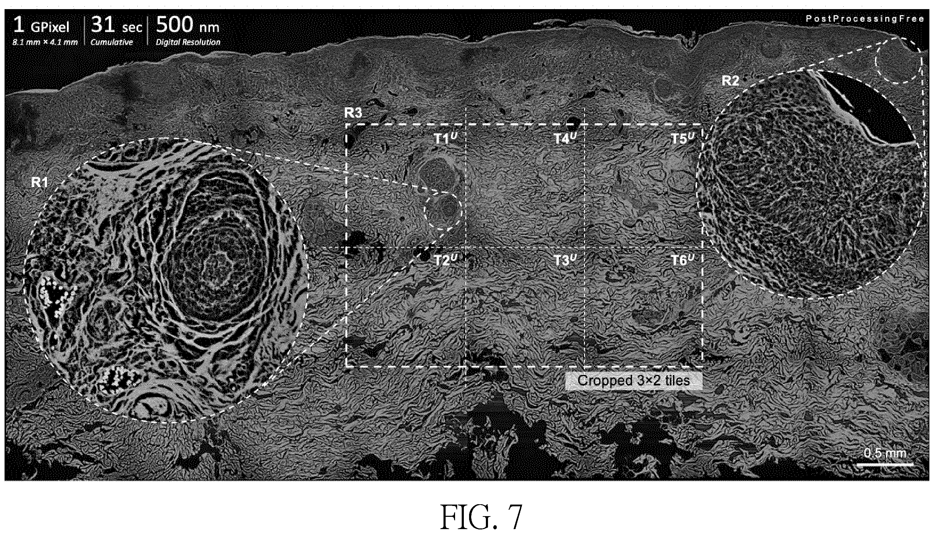

Reference can be further made to FIG. 7, which is an ultra-large $8\times4$-tile gigapixel image with a scale bar of 0.5 mm, consisting of $44,470\times22,609$ pixels or a total of 1 Gigapixels according to one embodiment of the present disclosure. A typical hematoxylin- and eosin-stained tissue slide (superficial basal cell carcinoma) was used as a sample. Each $1.1\times1.1$ mm$^2$ tile comprises $6000\times6000$ pixels (24-bit), ensuring a pixel size of 183 nm. While dashed circular ROIs R1 and R2 reveal a high digital resolution nature. It is noted that white dashed rectangular ROI R3 comprising $3\times2$ distortion compensated tiles ($T1^U$-$T6^U$) was cropped and used in A part of FIG. 6.

The ultra-large $8\times4$-tile gigapixel image in FIG. 7 is acquired, mosaic-stitched, and displayed in cumulative 31 seconds. No post-acquisition data processing was involved. A true effective pixel rate (EPR) of >30 M/s and an effective scanning rate (ESR) of >1 mm$^2$/s were secured with a sustained effective throughput of >770 M bits/sec.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. A mesoscale nonlinear optical gigascope (*m*NLOG) system wherein the *m*NLOG system (100) is configured for centimeter-scale laser-raster-scanning of a biological specimen (12) with Nyquist-satisfied <1 $\mu$m effective digital resolution providing an aliasing-free optically-sectioned cumulative point-scanning area ranging from 1 square millimeter (mm) up-to 400 square mm, the mNLOG system is configured to perform a rapid artifact-compensated two-dimensional large-field mosaic-stitching (rac2D-LMS) process enabling post-processing-free gigapixel mosaic-stitching and real-time digital display with a sustained effective data throughput of at least 500 Megabits per second (Mbps), and the *m*NLOG system (100) comprises:
a scanning head including:

   a scanning mirror; and
   a galvanometer scanning mirror, wherein the scanning mirror is optically coupled to one or more pulsed laser sources, the galvanometer scanning mirror is optically coupled to the scanning mirror, the one or more laser sources are configured to generate a resonant scanning laser beam (EXC), and the scanning mirror is a resonant scanning mirror or a polygon scanning mirror;
   a first relay system including:

   a scan lens (30); and
   a tube lens (31) providing a magnification factor of greater than 1, wherein the scan lens (30) is optically coupled to the galvanometer scanning mirror, and the tube lens (31) is optically coupled to the scan lens (30);
   an objective lens (10) optically coupled to the tube lens (31), wherein the objective lens (10) is used to focus the resonant scanning laser beam (EXC) over the biological specimen (12);
a multichannel optical detection unit, including:

a plurality of focusing lenses (L0, L1, L2, L3);
a plurality of dichroic beam splitters (D1, D2, D3, D4); and
a plurality of receivers (161, 162, 163), wherein one or more of nonlinear multi-harmonic generation and nonlinear multi-photon excitation fluorescence signals are collected by the plurality of receivers (161, 162, 163), respectively, through the focusing lenses (L0, L1, L2, L3) and the dichroic beam splitters (D1, D2, D3, D4), and the plurality of receivers (161, 162, 163) are configured to generate a plurality of electrical output signals;
a multichannel data acquisition and display unit configured to receive the plurality of electrical output signals, wherein the multichannel data acquisition and display unit includes:

a first transimpedance amplifier (TIA) (T1);
a second TIA (T2);
a third TIA (T3);
a multichannel digitizer (20);
a processing device including a computer with a central processing unit (CPU) and one or more graphics processing units (GPUs) (12) that perform multiple C++-based algorithms stored in a memory of the computer; and
a display device (21); and
a motorized three-dimensional (3D) stage unit (14) including a first electronic stage, a second electronic stage, and a third linear electronic stage that are used to bear and move the biological specimen (12),
**characterized in that**
in response to a rapid artifact-compensated two-dimensional large-field mosaic-stitching (rac2D-LMS) process being performed by the $m$NLOG system (100), the processing device is configured to:

obtain a plurality of image tiles (T1, T2) by digitizing the received optical signals (S2, S3, S4), wherein each two adjacent ones of the plurality of image tiles (T1, T2) overlap with each other;
perform a cosinusoidal distortion correction on the plurality of image tiles (T1, T2) to obtain a plurality of cosinusoidal distortion corrected image tiles;
perform a pixel size calibration on the plurality of cosinusoidal distortion corrected image tiles along a first horizontal direction and a second vertical direction to obtain a plurality of pixel calibrated image tiles;
perform a radial-distortion compensation on each of two adjacent ones of the plurality of pixel calibrated image tiles according to a compensating radial-distortion defined by an angle (A), a first spatial offset ($X_{off}$), a second spatial offset ($Y_{off}$) and an overlapping parameter, so as to generate a plurality of radial-distortion compensated image tiles ($T1^U$, $T2^U$); and
perform a mosaic-stitching on the plurality of radial-distortion compensated image tiles ($T1^U$, $T2^U$) to generate a mesoscale digital image of the biological specimen (12).

2. The mNLOG system (100) according to claim 1, wherein the objective lens (10) is provided with a numerical aperture (NA) that is greater than or close to 1.0.

3. The mNLOG system (100) according to claim 1, wherein each of the receivers (161, 162, 163) includes:

an optical band-pass filter (F1, F2, F3) configured to filter a received optical signal (S2, S3, S4); and
a photomultiplier tube configured to convert the received optical signal (S2, S3, S4) into an electrical output signal.

4. The mNLOG system (100) according to claim 1, wherein the radial-distortion compensation includes:

using two adjacent ones of the plurality of cosinusoidal distortion corrected image tiles $T1$ and $T2$ as input image tiles, each with C×R pixels with an overlapping region R12;
defining the angle as $A$, the first spatial offset as $X_{off}$, the second spatial offset as $Y_{off}$ for the input image tiles to provide with a compensating radial-distortion;
obtaining an assessment parameter $d_k$ based on a sum of absolute differences for all pixels within the overlapping region (R12) between the input image tiles and setting values of the angle, the first spatial offset and the second spatial offset corresponding to a minimum value of the assessment parameter, wherein the assessment parameter is defined as:

$$d_k = \frac{\sum_{\text{All R12 pixels}} |T1^U - T2^U|}{Area(R_{12})},$$

wherein $T1^U$ and $T2^U$ are the image tiles to be applied with the compensating radial-distortion; evaluating a first mathematical expression according to a field of view (FOV) distortion model:

$$r_d(x,y) = \frac{360}{A\pi} \tan^{-1} \left[ 2r_u(x,y) \tan \frac{A\pi}{720} \right].$$

wherein

$$r_u(x,y) = \sqrt{r_x(x,y)^2 + r_y(x,y)^2},$$

$$r_x(x,y) = \frac{1}{c_1}(F_x(x,y) - c_1),$$

$$r_y(x,y) = \frac{1}{c_2}\left(F_y(x,y) - c_2\right),$$

$$c_1 = 0.5C\left(1.0 + X_{off}/S_x\right),$$

$$c_2 = 0.5C\left(1.0 + Y_{off}/S_y\right),$$

$$F_x(x,y) = \begin{pmatrix} 0 & \cdots & C-1 \\ \vdots & \ddots & \vdots \\ 0 & \cdots & C-1 \end{pmatrix}_{C \times R},$$

and

$$F_y(x,y) = \begin{pmatrix} 0 & \cdots & 0 \\ \vdots & \ddots & \vdots \\ R-1 & \cdots & R-1 \end{pmatrix}_{C \times R}.$$

evaluating a multiplicative factor $f(x, y)$ for a pincushion distortion or a barrel distortion, wherein the multiplicative factor $f(x, y)$ is defined as $r_u(x, y)/r_d(x, y)$ for the pincushion distortion, or defined as $r_d(x, y)/r_u(x, y)$ otherwise; calculating two pixel-coordinate maps ($M_x(x, y)$, $M_y(x, y)$) for the first horizontal direction and the second vertical direction, wherein the two pixel-coordinate maps ($M_x(x, y)$, $M_y(x, y)$) are defined as:

$$M_x(x,y) = C_1[1 + r_x(x,y) f(x,y)]$$

and

$$M_y(x, y) = C_2\big[1 + r_y(x, y)\, f(x, y)\big];$$

and

performing pixel remapping as per the two pixel-coordinate maps ($M_x(x, y)$, $M_y(x, y)$) for the input image tiles to obtain two adjacent ones of the plurality of radial-distortion compensated image tiles (T1$^U$, T2$^U$).

5. The *m*NLOG system (100) according to claim 4, wherein the radial-distortion compensation further includes:

converting the input image tiles to 8-bit grayscale format;
performing a morphological opening operation on each of the input image tiles; and
applying a binary thresholding on the input image tiles.

6. The mNLOG system (100) according to claim 1, wherein the mosaic-stitching includes:

sliding a to-be-aligned image tile (T5$^U$) along the first horizontal direction and the second vertical direction toward at least one existing image tile (T2$^U$, T4$^U$) of the plurality of radial-distortion compensated image tiles (T1$^U$, T2$^U$), so as to obtain a plurality of overlapping regions (R) of interests (ROIs) between the to-be-aligned image tile (T5$^U$) and the at least one existing image tile (T4$^U$) based on a motion of the motorized 3D stage (14);
comparing the overlapping ROIs (R54, R52) to the to-be-aligned image tile (T5$^U$) and the at least one existing image tile (T2$^U$, T4$^U$), so as to identify one or more major overlapping ROIs (R54, R52);
performing cross-correlation operation between the to-be-aligned image tile (T5$^U$) and the at least one existing image tile (T2$^U$, T4$^U$) according to the one or more major overlapping ROIs (R54, R52) and for each ROI a per-pixel absolute difference is calculated for each pixel and a standard deviation is calculated; and
placing the to-be-aligned image tile (T5$^U$) over the at least one existing image tile (T2$^U$, T4$^U$) wherein the standard deviation is found to be minimum.

**Patentansprüche**

1. Mesoskala-Nichtlinear-Optik-Gigaskop-System (*m*NLOG-System), wobei:

das mNLOG-System (100) konfiguriert ist zum Zentimeter-Skala-Laser-Raster-Abtasten einer biologischen Probe (12) mit einer effektiven digitalen Auflösung, welche Nyquist < 1 µm erfüllt, wodurch ein Aliasingfreie-Optisch-Geschnittene-Kumulative-Punktabtastung-Bereich, welcher 1 Quadratmillimeter (Quadrat-mm) bis 400 Quadrat-mm beträgt, bereitgestellt ist, wobei das mNLOG-System so konfiguriert ist, dass es ein Schnelles-Artefaktkompensiertes-Zweidimensionales-Großfeld-Mosaik-Stitching-Verfahren (rac2D-LMS-Verfahren) durchführt, welches ein Nachbearbeitungsfreies-Gigapixel-Mosaik-Stitching-Verfahren und eine Echtzeit-Digital-Anzeige mit einem durchgängigen effektiven Datendurchsatz von mindestens 500 Megabit pro Sekunde (Mbps) ermöglicht, und
das mNLOG-System (100) aufweist:

einen Abtastkopf, welcher aufweist:

einen Abtastspiegel; und
einen Galvanometer-Abtastspiegel, wobei der Abtastspiegel optisch mit einer oder mehreren gepulsten Laserquellen gekoppelt ist, wobei der Galvanometer-Abtastspiegel optisch mit dem Abtastspiegel gekoppelt ist, wobei die eine oder die mehreren Laserquellen so konfiguriert sind, dass sie einen Resonanz-Abtastung-Laser-Strahl (EXC) erzeugen, und wobei der Abtastspiegel ein Resonanz-Abtastspiegel oder ein Polygon-Abtastspiegel ist;

ein erstes Relaissystem, welches aufweist:

eine Abtatstlinse (30); und
eine Tubuslinse (31), welche einen Vergrößerungsfaktor von mehr als 1 bereitstellt, wobei die Abtastlinse (30) optisch mit dem Galvanometer-Abtastspiegel gekoppelt ist, und wobei die Tubuslinse (31) optisch mit der Abtastlinse (30) gekoppelt ist;

eine Objektivlinse (10), welche optisch mit der Tubuslinse (31) gekoppelt ist, wobei die Objektivlinse (10) verwendet wird, um den Resonanz-Abtastung-Laser-Strahl (EXC) über der biologischen Probe (12) zu fokussieren;
eine Mehrkanal-Optische-Erfassung-Einheit, welche aufweist:

mehrere Fokussierlinsen (L0, L1, L2, L3);
mehrere dichroitische Strahlteiler (D1, D2, D3, D4); und
mehrere Empfangsvorrichtungen (161, 162, 163), wobei eines oder mehrere von nichtlinearen Multi-Harmonische-Erzeugung-Signalen und nichtlineare Multi-Photonen-Anregung-Fluoreszenz-Signalen mittels den mehreren Empfangsvorrichtungen (161, 162, 163) jeweils durch die Fokussierlinsen (L0, L1, L2, L3) und die dichroitischen Strahlteiler (D1, D2, D3, D4) erfasst werden, und wobei die mehreren Empfangsvorrichtungen (161, 162, 163) so konfiguriert sind, dass sie mehrere elektrische Ausgangssignale erzeugen;

eine Mehrkanal-Daten-Erlangung-und-Anzeige-Einheit, welche konfiguriert ist, um die mehreren elektrischen Ausgangssignale zu empfangen, wobei die Mehrkanal-Daten-Erlangung-und-Anzeige-Einheit aufweist:

einen ersten Transimpedanzverstärker (TIA) (T1);
einen zweiten TIA (T2);
einen dritten TIA (T3);
eine Mehrkanal-Digitalisierung-Vorrichtung (20);
eine Verarbeitungsvorrichtung, welche einen Computer mit einer Zentrale-Verarbeitung-Einheit (CPU) und einer oder mehreren Grafikverarbeitungseinheiten (GPUs) (12) aufweist, welche mehrere C++-basierte Algorithmen, welche in einem Speicher des Computers gespeichert sind, durchführen; und
eine Anzeigevorrichtung (21); und

eine motorisierte dreidimensionale (3D) Plattformeinheit (14), welche eine erste elektronische Plattform, eine zweite elektronische Plattform und eine dritte lineare elektronische Plattform aufweist, welche dafür verwendet werden, die biologische Probe (12) zu tragen und zu bewegen,
**dadurch gekennzeichnet, dass**:
in Reaktion auf ein Schnelles-Artefaktkompensiertes-Zweidimensionales-Großfeld-Mosaik-Stitching-Verfahren (rac2D-LMS-Verfahren), welches mittels des mNLOG-Systems (100) durchgeführt wird, die Verarbeitungsvorrichtung konfiguriert ist, um:

mehrere Bildkacheln (T1, T2) mittels Digitalisierens der empfangenen optischen Signale (S2, S3, S4) zu erlangen, wobei jeweils zwei benachbarte von den mehreren Bildkacheln (T1, T2) einander überlappen;
eine Kosinusverzerrungskorrektur an den mehreren Bildkacheln (T1, T2) durchzuführen, um mehrere kosinusverzerrungskorrigierte Bildkacheln zu erlangen;
eine Pixelgrößenkalibrierung an den mehreren kosinusverzerrungskorrigierten Bildkacheln entlang von einer ersten horizontalen Richtung und einer zweiten vertikalen Richtung durchzuführen, um mehrere pixelkalibrierte Bildkacheln zu erlangen;
eine Radialverzerrungskompensation an jeder von zwei benachbarten von den mehreren pixelkalibrierten Bildkacheln durchzuführen gemäß einer Kompensierungsradialverzerrung, welche mittels eines Winkels (A), einem ersten räumlichen Versatz ($X_{off}$), einem zweiten räumlichen Versatz ($Y_{off}$) und einem Überlappungsparameter definiert ist, um mehrere radialverzerrungskompensierte Bildkacheln ($T1^U$, $T2^U$) zu erzeugen; und
ein Mosaik-Stitching an den mehreren radialverzerrungskompensierten Bildkacheln ($T1^U$, $T2^U$) durchzuführen, um ein Mesoskala-Digital-Bild der biologischen Probe (12) zu erzeugen.

2. Das mNLOG-System (100) gemäß Anspruch 1, wobei die Objektivlinse (10) mit einer numerischen Apertur (NA) versehen ist, welche größer als oder beinahe 1,0 beträgt.

3. Das mNLOG-System (100) gemäß Anspruch 1, wobei jede von den Empfangsvorrichtungen (161, 162, 163) aufweist:

einen optischen Bandpass-Filter (F1, F2, F3), welcher so konfiguriert ist, dass er ein empfangenes optisches Signal (S2, S3, S4) filtert; und

eine Fotomultiplier-Röhre, welche so konfiguriert ist, dass sie das empfangene optische Signal (S2, S3, S4) in ein elektrisches Ausgangssignal umwandelt.

**4.** Das mNLOG-System (100) gemäß Anspruch 1, wobei die Radialverzerrungskompensation aufweist:

Verwenden von zwei benachbarten von den mehreren kosinusverzerrungskorrigierten Bildkacheln $T1$ and $T2$ als Eingangsbildkacheln mit jeweils C×R Pixeln mit einem überlappenden Bereich R12;

Definieren des Winkels als $A$, des ersten räumlichen Versatzes als $K_{off}$ und des zweiten räumlichen Versatzes als $Y_{off}$ für die Eingangsbildkacheln, um eine Kompensierungsradialverzerrung bereitzustellen;

Erlangen eines Bewertungsparameters $d_k$ basierend auf einer Summe von absoluten Differenzen für alle Pixel innerhalb des überlappenden Bereichs (R12) zwischen den Eingangsbildkacheln, und Einstellen von Werten des Winkels, des ersten räumlichen Versatzes und des zweiten räumlichen Versatzes korrespondierend zu einem Minimalwert des Bewertungsparameters, wobei der Bewertungsparameter definiert ist als:

$$d_k = \frac{\sum_{\text{All e\_R12\_Pixel}}\left|T1^U - T2^U\right|}{Fläche(R_{12})},$$

wobei $T1^U$ and $T2^U$ die Bildkacheln sind, an welchen die Kompensierungsradialverzerrung angewendet werden soll;

Auswerten eines ersten mathematischen Ausdrucks gemäß einem Sichtfeld-Verzerrungsmodells (FOV-Verzerrungsmodells):

$$r_d(x,y) = \frac{360}{A\pi}\tan^{-1}\left[2r_u(x,y)\tan\frac{A\pi}{720}\right] ;$$

wobei:

$$r_u(x,y) = \sqrt{r_x(x,y)^2 + r_y(x,y)^2},$$

$$r_x(x,y) = \frac{1}{c_1}\left(F_x(x,y) - c_1\right),$$

$$r_y(x,y) = \frac{1}{c_2}\left(F_y(x,y) - c_2\right),$$

$$c_1 = 0{,}5C\left(1{,}0 + X_{off}/S_x\right),$$

$$c_2 = 0{,}5C\left(1{,}0 + Y_{off}/S_y\right),$$

$$F_x(x,y) = \begin{pmatrix} 0 & \cdots & C-1 \\ \vdots & \ddots & \vdots \\ 0 & \cdots & C-1 \end{pmatrix}_{C\times R} ,$$

und

$$F_y(x,y) = \begin{pmatrix} 0 & \cdots & 0 \\ \vdots & \ddots & \vdots \\ R-1 & \cdots & R-1 \end{pmatrix}_{C\times R},$$

Auswerten eines Multiplikationsfaktors $f(x, y)$ für eine kissenförmige Verzerrung oder eine tonnenförmige Verzerrung, wobei der Multiplikationsfaktor $f(x, y)$ als $r_u(x, y)/r_d(x, y)$ für die kissenförmige Verzerrung definiert ist oder andernfalls als $r_d(x, y)/r_u(x, y)$ definiert ist;

Berechnen von zwei Pixelkoordinatenkarten ($M_x(x, y)$, $M_y(x, y)$) für die erste horizontale Richtung und die zweite vertikale Richtung, wobei die zwei Pixelkoordinatenkarten ($M_x(x, y)$, $M_y(x, y)$) definiert sind als:

$$M_x(x, y) = C_1[1 + r_x(x, y)\, f(x, y)]$$

und

$$M_y(x, y) = C_2[1 + r_y(x, y)\, f(x, y)];$$

und

Durchführen von Pixel-Remapping gemäß den zwei Pixelkoordinatenkarten ($M_x(x, y)$, $M_y(x, y)$) für die Eingangsbildkacheln, um zwei benachbarte von den mehreren radialverzerrungskompensierten Bildkacheln (T1$^U$, T2$^U$) zu erlangen.

5. Das mNLOG-System (100) gemäß Anspruch 4, wobei die Radialverzerrungskompensation ferner aufweist:

Konvertieren der Eingangsbildkacheln in ein 8-Bit-Graustufenformat;
Durchführen einer morphologischen Öffnungsoperation an jeder von den Eingangsbildkacheln; und
Anwenden einer Binär-Schwellenwert-Bildung auf die Eingangsbildkacheln.

6. Das mNLOG-System (100) gemäß Anspruch 1, wobei das Mosaik-Stitching aufweist:

Verschieben einer auszurichtenden Bildkachel (T5$^U$) entlang von der ersten horizontalen Richtung und der zweiten vertikalen Richtung in Richtung hin zu mindestens einer vorhandenen Bildkachel (T2$^U$, T4$^U$) von den mehreren radialverzerrungskompensierten Bildkacheln (T1$^U$, T2$^U$), um mehrere überlappende Bereiche (R) von Interesse (ROIs) zwischen der auszurichtenden Bildkachel (T5$^U$) und der mindestens einen vorhandenen Bildkachel (T4$^U$) basierend auf einer Bewegung der motorisierten 3D-Plattform (14) zu erlangen;
Vergleichen von den überlappenden ROIs (R54, R52) mit der auszurichtenden Bildkachel (T5$^U$) und der mindestens einen vorhandenen Bildkachel (T2$^U$, T4$^U$), um einen oder mehrere überlappende Haupt-ROIs (R54, R52) zu identifizieren;
Durchführen eines Kreuzkorrelationsvorgangs zwischen der auszurichtenden Bildkachel (T5$^U$) und der mindestens einen vorhandenen Bildkachel (T2$^U$, T4$^U$) gemäß dem einen oder den mehreren überlappenden Haupt-ROIs (R54, R52), und wobei für jeden ROI eine absoluten Differenz pro Pixel für jedes Pixel berechnet wird und eine Standardabweichung berechnet wird; und
Platzieren der auszurichtenden Bildkachel (T5$^U$) über der mindestens einen vorhandenen Bildkachel (T2$^U$, T4$^U$), wobei die Standardabweichung so gefunden wird, dass sie minimal ist.

## Revendications

1. Système de gigascope optique non linéaire à méso-échelle (mNLOG), dans lequel :

le système mNLOG (100) est configuré pour le balayage laser à trame à l'échelle centimétrique d'un échantillon biologique (12) avec une résolution numérique effective satisfaisant à la condition de Nyquist < 1 $\mu$m, fournissant une zone de balayage ponctuel cumulatif à section optique sans aliasing allant de 1 millimètre carré (mm) jusqu'à 400 mm carrés, le système mNLOG est configuré pour effectuer un processus rapide d'assemblage en mosaïque bidimensionnel à grand champ compensé en artéfacts (rac2D-LMS) permettant un assemblage en mosaïque gigapixel sans post-traitement et un affichage numérique en temps réel avec un débit de données effectif soutenu d'au moins 500 mégabits par seconde (Mbps),
et le système mNLOG (100) comprend :
une tête de balayage, comprenant :

un miroir de balayage ; et
un miroir de balayage galvanométrique, dans lequel le miroir de balayage est couplé optiquement à une ou plusieurs sources laser pulsées, le miroir de balayage galvanométrique est couplé optiquement au miroir de balayage, ladite une ou lesdites plusieurs sources laser sont configurées pour générer un faisceau laser de balayage résonnant (EXC), et le miroir de balayage est un miroir de balayage résonnant ou un miroir de balayage polygonal ;

un premier système de relais comprenant :

une lentille de balayage (30) ; et
une lentille tubulaire (31) fournissant un facteur de grossissement supérieur à 1, où la lentille de balayage (30) est couplée optiquement au miroir de balayage galvanométrique, et la lentille tubulaire (31) est couplée optiquement à la lentille de balayage (30) ;
une lentille d'objectif (10) couplée optiquement à la lentille tubulaire (31), où la lentille d'objectif (10) est utilisée pour focaliser le faisceau laser de balayage résonnant (EXC) sur l'échantillon biologique (12) ;
une unité de détection optique multicanal, comprenant :

une pluralité de lentilles de focalisation (L0, L1, L2, L3) ;
une pluralité de séparateurs de faisceau dichroïques (D1, D2, D3, D4) ; et
une pluralité de récepteurs (161, 162, 163), dans lequel un ou plusieurs parmi des signaux de fluorescence de génération multi-harmonique non linéaire et d'excitation multi-photon non linéaire sont collectés par la pluralité de récepteurs (161, 162, 163), respectivement, à travers les lentilles de focalisation (L0, L1, L2, L3) et les séparateurs de faisceau dichroïques (D1, D2, D3, D4), et la pluralité de récepteurs (161, 162, 163) sont configurés pour générer une pluralité de signaux de sortie électriques ;
une unité d'acquisition et d'affichage de données multicanal configurée pour recevoir la pluralité de signaux de sortie électriques, où l'unité d'acquisition et d'affichage de données multicanal comprend :

un premier amplificateur transimpédance (TIA) (T1) ;
un deuxième TIA (T2) ;
un troisième TIA (T3) ;
un numériseur multicanal (20) ;
un dispositif de traitement comprenant un ordinateur avec une unité de traitement centrale (CPU) et une ou plusieurs unités de traitement graphique (GPU) (12) qui exécutent plusieurs algorithmes basés sur C++ stockés dans une mémoire de l'ordinateur ; et
un dispositif d'affichage (21) ; et
une unité de platine (14) tridimensionnelle (3D) motorisée comprenant une première platine électronique, une deuxième platine électronique et une troisième platine électronique linéaire qui sont utilisées pour supporter et déplacer l'échantillon biologique (121),
**caractérisé en ce que**, en réponse à un processus rapide d'assemblage en mosaïque bidimensionnel à grand champ compensé en artéfacts (rac2D-LMS) exécuté par le système $m$NLOG (100), le dispositif de traitement est configuré pour :

obtenir une pluralité de tuiles d'image (T1, T2) en numérisant les signaux optiques reçus (S2, S3, S4), où deux tuiles adjacentes de la pluralité de tuiles d'image (T1, T2) se chevauchent ;
effectuer une correction de distorsion cosinusoïdale sur la pluralité de tuiles d'image (T1, T2) pour obtenir une pluralité de tuiles d'image corrigées de la distorsion cosinusoïdale ;
effectuer un calibrage de taille de pixels sur la pluralité de tuiles d'image corrigées de la distorsion cosinusoïdale le long d'une première direction horizontale et d'une deuxième direction verticale pour obtenir une pluralité de tuiles d'image à pixels calibrés ;
effectuer une compensation de distorsion radiale sur chacune de deux tuiles adjacentes de la pluralité de tuiles d'image à pixels calibrés selon une distorsion radiale de compensation définie par un angle (A), un premier décalage spatial ($X_{off}$), un deuxième décalage spatial ($Y_{off}$) et un paramètre de chevauchement, de manière à générer une pluralité de tuiles d'image à distorsion radiale compensée ($T1^U$, $T2^U$) ; et
effectuer un assemblage en mosaïque sur la pluralité de tuiles d'image à distorsion radiale compensée ($T1^U$, $T2^U$) pour générer une image numérique à méso-échelle de l'échantillon biologique (12).

2. Système mNLOG (100) selon la revendication 1, dans lequel la lentille d'objectif (10) est dotée d'une ouverture numérique (NA) supérieure à ou proche de 1,0.

3. Système mNLOG (100) selon la revendication 1, dans lequel chacun des récepteurs (161, 162, 163) comprend :

un filtre optique passe-bande (F1, F2, F3) configuré pour filtrer un signal optique reçu (S2, S3, S4) ; et
un tube photomultiplicateur configuré pour convertir le signal optique reçu (S2, S3, S4) en un signal de sortie électrique.

4. Système mNLOG (100) selon la revendication 1, dans lequel la compensation de distorsion radiale comprend :

l'utilisation de deux tuiles d'image adjacentes parmi la pluralité de tuiles d'image corrigées de la distorsion cosinusoïdale T1 et T2 comme tuiles d'image d'entrée, chacune avec C x R pixels avec une région de chevauchement R12 ;
la définition de l'angle comme A, du premier décalage spatial comme $X_{off}$, du deuxième décalage spatial comme $Y_{off}$ pour les tuiles d'image d'entrée afin de fournir une distorsion radiale compensatrice ;
l'obtention d'un paramètre d'évaluation $d_k$ basé sur une somme de différences absolues pour tous les pixels dans la région de chevauchement (R12) entre les tuiles d'image d'entrée et le réglage de valeurs de l'angle, du premier décalage spatial et du deuxième décalage spatial correspondant à une valeur minimale du paramètre d'évaluation, où le paramètre d'évaluation est défini comme :

$$d_k = \frac{\sum_{\text{tous\_R12\_pixels}} \left| T1^U - T2^U \right|}{surface\ (R_{12})} \ ,$$

où $T1^U$ et $T2^U$ sont les tuiles d'image à appliquer avec la distorsion radiale compensatrice ;
l'évaluation d'une première expression mathématique selon un modèle de distorsion de champ de vision (FOV) :

$$r_d(x, y) = \frac{360}{A\pi} \tan^{-1} \left[ 2r_u(x, y) \tan \frac{A\pi}{720} \right],$$

dans laquelle

$$r_u(x, y) = \sqrt{r_x(x, y)^2 + r_y(x, y)^2},$$

$$r_x(x, y) = \frac{1}{c_1} \left( F_x(x, y) - c_1 \right),$$

$$r_y(x, y) = \frac{1}{c_2} \left( F_y(x, y) - c_2 \right),$$

$$c_1 = 0{,}5C \left( 1{,}0 + X_{off}/S_x \right),$$

$$c_2 = 0{,}5C \left( 1{,}0 + Y_{off}/S_y \right),$$

$$F_x(x, y) = \begin{pmatrix} 0 & \cdots & C-1 \\ \vdots & \ddots & \vdots \\ 0 & \cdots & C-1 \end{pmatrix}_{C \times R} \ ,$$

et

$$F_y(x, y) = \begin{pmatrix} 0 & \cdots & 0 \\ \vdots & \ddots & \vdots \\ R-1 & \cdots & R-1 \end{pmatrix}_{C \times R},$$

l'évaluation d'un facteur multiplicatif $f(x, y)$ pour une distorsion en coussinet ou une distorsion en barillet, où le facteur multiplicatif $f(x, y)$ est défini comme $r_u(x, y)/r_d(x, y)$ pour la distorsion en coussinet, ou autrement défini comme $r_d(x, y)/r_u(x, y)$ ;

le calcul de deux cartes de coordonnées de pixels $(M_x(x, y), M_y(x, y))$ pour la première direction horizontale et la deuxième direction verticale, dans lequel les deux cartes de coordonnées de pixels $(M_x(x, y), M_y(x, y))$ sont définies comme :

$$M_x(x, y) = C_1[1 + r_x(x, y) f(x, y)]$$

et

$$M_y(x, y) = C_2[1 + r_y(x, y) f(x, y)],$$

et

la réalisation d'un remappage de pixels selon les deux cartes de coordonnées de pixels $(M_x(x, y), M_y(x, y))$ pour les tuiles d'image d'entrée afin d'obtenir deux tuiles adjacentes de la pluralité de tuiles d'image à distorsion radiale compensée (T1$^U$, T2$^U$).

5.  Système mNLOG (100) selon la revendication 4, dans lequel la compensation de distorsion radiale comprend en outre :

la conversion des tuiles d'image d'entrée au format 8 bits en niveaux de gris ;
la réalisation d'une opération d'ouverture morphologique sur chacune des tuiles d'image d'entrée ; et
l'application d'un seuil binaire sur les tuiles d'image d'entrée.

6.  Système mNLOG (100) selon la revendication 1, dans lequel l'assemblage en mosaïque comprend :

le glissement d'une tuile d'image à aligner (T5$^U$) le long de la première direction horizontale et de la deuxième direction verticale vers au moins une tuile d'image existante (T2$^U$, T4$^U$) de la pluralité de tuiles d'image à distorsion radiale compensée (T1$^U$, T2$^U$), afin d'obtenir une pluralité de régions de chevauchement (R) d'intérêt (ROI) entre la tuile d'image à aligner (T5$^U$) et ladite au moins une tuile d'image existante (T4$^U$) en fonction d'un mouvement de la platine 3D motorisée (14) ;
la comparaison des ROI chevauchantes (R54, R52) à la tuile d'image à aligner (T5$^U$) et à ladite au moins une tuile d'image existante (T2$^U$, T4$^U$), afin d'identifier une ou plusieurs ROI principales chevauchantes (R54, R52) ;
l'exécution d'une opération de corrélation croisée entre la tuile d'image à aligner (T5$^U$) et ladite au moins une tuile d'image existante (T2$^U$, T4$^U$) selon ladite une ou lesdites plusieurs ROI principales chevauchantes (R54, R52) et, pour chaque ROI, une différence absolue par pixel est calculée pour chaque pixel et un écart-type est calculé ; et
le placement de la tuile d'image à aligner (T5$^U$) sur ladite au moins une tuile d'image existante (T2$^U$, T4$^U$), où l'écart-type est jugé le plus faible.

FIG. 1

```
┌─────────────────────────────────────────────────────────┐
│           obtaining biological specimen                  │─── S100
└─────────────────────────────────────────────────────────┘
                            │
                            ▼
┌─────────────────────────────────────────────────────────┐
│  configuring detection device to obtain emerging optical │
│  signal associated to biological specimen along 1st      │─── S101
│  horizontal direction and 2nd vertical direction through │
│  the scanning mirror head                                │
└─────────────────────────────────────────────────────────┘
                            │
                            ▼
┌─────────────────────────────────────────────────────────┐
│  obtaining image tiles by digitizing emerging fluorenone │─── S102
│  signal                                                  │
└─────────────────────────────────────────────────────────┘
                            │
                            ▼
┌─────────────────────────────────────────────────────────┐
│  perform cosinusoidal distortion correction on image     │
│  tiles to obtain cosinusoidal distortion corrected       │─── S103
│  image tiles                                             │
└─────────────────────────────────────────────────────────┘
                            │
                            ▼
┌─────────────────────────────────────────────────────────┐
│  perform pixel size calibration on corrected image tiles │
│  along 1st and 2nd directions to obtain pixel calibrated │─── S104
│  image tiles                                             │
└─────────────────────────────────────────────────────────┘
                            │
                            ▼
┌─────────────────────────────────────────────────────────┐
│     perform radial-distortion correction on each of two  │
│     adjacent ones of corrected image tiles according to  │
│     compensating radial distortion defined by angle, 1st │─── S105
│  and 2nd spatial offsets and overlapping parameter, so as│
│     to generate radial-distortion compensated image tiles│
└─────────────────────────────────────────────────────────┘
                            │
                            ▼
┌─────────────────────────────────────────────────────────┐
│  performing mosaic-stitching on radial-distortion        │
│  compensated image tiles to generate mesoscale digital   │─── S106
│  image of biological specimen                            │
└─────────────────────────────────────────────────────────┘
```

# FIG. 2

FIG. 3

A  Distorted tiles

C  Distortion compensated tiles

Tile 1     Tile 2

this method

$A = 51$

$X_{off} = -49$

$Y_{off} = -47$

Tile 1     Tile 2

B

D

FIG. 4

FIG. 5

FIG. 6

FIG. 7

**EP 4 354 196 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011147615 A1
- US 2017038576 A1